# EUROPÄISCHE PATENTSCHRIFT

(11) **EP 3 096 921 B1**
(45) Veröffentlichungstag und Bekanntmachung des Hinweises auf die Patenterteilung: **19.06.2019**
(21) Anmeldenummer: 15708723.0
(22) Anmeldetag: 21.01.2015
(51) Int. Cl.: B23Q 7/04

(54) **BEARBEITUNGSVORRICHTUNG ZUR MASCHINENGESTÜTZTEN HERSTELLUNG UND BEARBEITUNG VON DENTALEN WERKSTÜCKEN**
MACHINING DEVICE FOR MACHINE-ASSISTED PRODUCTION AND MACHINING OF DENTAL WORKPIECES
DISPOSITIF D'USINAGE POUR LA FABRICATION ET L'USINAGE ASSISTÉS PAR ORDINATEUR DE PIÈCES DENTAIRES

(30) Priorität: 23.01.2014 DE 102014000864
(43) Veröffentlichungstag der Anmeldung: 30.11.2016
(73) Patentinhaber: Huber, Martin, 5452 Pfarrwerfen (AT); Wörmer, Alfons, 5500 Bischofshofen (AT)
(72) Erfinder: Huber, Martin, 5452 Pfarrwerfen (AT); Wörmer, Alfons, 5500 Bischofshofen (AT)
(74) Vertreter: Baronetzky, Klaus
(86) Internationale Anmeldenummer: PCT/EP2015/000100
(87) Internationale Veröffentlichungsnummer: WO 2015/110259

(56) Entgegenhaltungen:
- EP-A2- 1 927 430
- EP-B1- 1 614 396
- DE-A1-102009 011 672
- DE-B3-102008 005 937
- DE-U1- 8 525 630

## Beschreibung

Die Erfindung betrifft eine Bearbeitungsvorrichtung für dentale Anwendungen nach dem Oberbegriff des Patentanspruches 1.

Solche Bearbeitungsvorrichtungen zeichnen sich dadurch aus, dass in den Räumen der Zahnarztpraxis unter der Aufsicht des Zahnarztes ein oder mehrere künstliche Zähne - sogar in Anwesenheit des Patienten - hergestellt werden können. Es findet demnach nicht eine industrielle Herstellung und Bearbeitung eines oder mehrerer künstlicher Zähne mit industriellen Maschinen im Zahnlabor statt, sondern stattdessen eine hochgenaue Herstellung und Bearbeitung eines oder mehrerer künstlicher Zähne mit einer möglichst klein bauenden und leicht zu handhabenden Bearbeitungsvorrichtung statt.

Die Erfindung geht von einer Bearbeitungsvorrichtung aus, wie sie durch Entwicklungen der Firma Sirona Dental Systems GmbH gemäß der EP 1 614 396 B1 geschaffen wurde. Es wird zunächst ein dreidimensionales Abbild des dentalen Zahnersatzteils hergestellt und danach das dentale Zahnersatzteil nach dem CAD/CAM-Prinzip in einer Bearbeitungsvorrichtung aus einem Rohmaterial durch spanabhebende Bearbeitung hergestellt. Es sind lediglich angetriebene Werkzeuge ohne Werkzeug-Magazin vorhanden. Damit besteht der Nachteil einer notwendigen Umrüstung der Werkzeuge, weil nach dem Einsatz eines ersten Bearbeitungswerkzeugsatzes die Maschine gestoppt und ein zweiter Bearbeitungswerkzeugsatz eingespannt werden muss. Insbesondere unterschiedliche Rohteil-Materialien erfordern unterschiedliche Werkzeugsätze. Außerdem kann immer nur ein Werkstück-Rohling bearbeitet werden.

Es ist eine zweite Bearbeitungsvorrichtung des gleichen Patentinhabers bekannt geworden, bei der ein heb- und senkbarer, sowie drehbarer Werkstückhalter vorgesehen ist, in dem der Werkstück-Rohling zum Zweck der Bearbeitung eingespannt ist.

Links und rechts des Werkstückhalters, der den zu bearbeitenden Zahn trägt, sind zu- und wegstellbare Spindeln vorgesehen, die in zueinander versetzten Werkzeugachsen gelagert sind und zum Zweck der Bearbeitung des Kunstzahns dem Werkstückhalter zugestellt werden können.

Nachteil bei dieser bekannten Vorrichtung ist jedoch, dass im Werkstückhalter lediglich ein einziger zu bearbeitender Zahn aufgenommen ist. Damit ist es notwendig, das komplette Bearbeitungsprogramm für die Herstellung des Zahnes durchzuführen, bevor nach Vollendung der vollständigen Bearbeitung der fertig bearbeitete Zahn aus dem Werkstückhalter herausgenommen und durch einen neuen zu bearbeitenden Zahn ersetzt werden kann.

Damit besteht der Nachteil, dass eine zeitraubende Fertigung eines einzelnen Zahnes notwendig ist, weil der Zahn immer fertig bearbeitet werden muss, bevor ein weiterer Zahn der Bearbeitung zugeführt werden kann.

Der Werkstückwechsel, das heißt, die Entfernung des fertig bearbeiteten Zahns und der Ersatz durch ein neu zu bearbeitendes Werkstück, erfolgt manuell. Auch damit ist die Arbeitsweise der Vorrichtung eingeschränkt, weil stets ein manueller Eingriff während der Bearbeitung notwendig ist und in dieser Zeit kann eine weitere Bearbeitung nicht stattfinden.

Die Anordnung ist relativ groß bauend, weil die Bearbeitungsspindeln mit ihren Antriebselementen seitlich und gegenüberliegend zum mittigen Werkstückhalter zugestellt werden, was mit einer relativ großen Baulänge der Bearbeitungsvorrichtung erkauft werden muss.

Weiterer Nachteil ist, dass die Bearbeitungswerkzeuge mit den Antriebselementen von beiden Seiten dem Werkstückhalter zugeführt werden, was mit einem höheren Aufwand für die Ausbildung der Antriebselemente verbunden ist, und einer aufwendigeren Steuerung bedarf, denn die Steuerung muss zwischen der rechten und linken Zuführseite der Bearbeitungsvorrichtung unterscheiden und programmiert werden.

Das bekannte Konzept beruht darauf, dass mit einer Antriebsspindel mehrere Werkzeuge koppelbar sind, was jedoch bei dem bekannten Konzept zu dem Nachteil führt, dass sowohl auf der linken als auch auf der rechten Seite der Bearbeitungsvorrichtung jeweils eine Antriebsspindel vorgesehen werden muss und auf jeder Seite die zugeordneten Werkzeugwechsler angeordnet werden müssen. Auch dies erfordert einen hohen Maschinenaufwand und hohe Kosten bei der Herstellung einer solchen Bearbeitungsvorrichtung.

Der Erfindung liegt deshalb die Aufgabe zugrunde, eine Bearbeitungsvorrichtung der eingangs genannten Art so weiterzubilden, dass sie bei wesentlich einfacherem Aufbau und einem vereinfachten Steuerprogramm mit geringeren Herstellungskosten hergestellt werden kann.

Zur Lösung der gestellten Aufgabe ist die Erfindung durch die technische Lehre des Anspruches 1 gekennzeichnet.

Das Grundprinzip der Erfindung beruht darauf, dass das in einem mehrachsigen Werkstückhalter aufgenommene Werkstück einem in einer anderen Ebene angeordneten Werkzeughalter zugeführt wird, welcher Werkzeughalter mindestens eine drehangetriebene Spindel trägt, die auf der ihr zugeordneten Ebene verbleibt und dass das in dem Werkstückhalter eingespannte, zu bearbeitende Werkstück auf diese Spindel mit einem dort auswechselbar angeordneten Werkzeug zugestellt und dort bearbeitet wird.

Merkmal einer ersten Ausführung der Erfindung nach dem unabhängigen Anspruch 1 ist, dass der Werkstückhalter als Mehrachs-Roboter ausgebildet ist, auf dessen einen Seite mindestens ein Werkzeughalter mit einem darauf drehbar angetriebenen und auswechselbaren Werkzeug angeordnet ist und dass auf der anderen Seite des mehrachsigen Werkstückhalters ein als Werkzeugspeicher ausgebildeter Werkzeugwechsler angeordnet ist, in dem die zu bearbeitenden Werkstücke auswechselbar aufgenommen sind.

Merkmal dieser Ausführungsform ist, dass nach dieser Erfindungsidee der Werkzeughalter lediglich im Minimalfall mit einer einzigen drehangetriebenen Spindel auskommt, auf die eine Vielzahl von Werkzeugen ankoppelbar sind. Zur Bearbeitung eines Werkstücks wird das in den mehrachsigen Werkstückhalter eingespannte Werkstück dieser Spindel zugestellt und von dem in der Spindel eingespannten Werkzeug bearbeitet.

Damit wird der Aufwand bei der Fertigung eines Werkzeughalters wesentlich minimiert, weil im einfachsten Fall nur eine einzige drehangetriebene Spindel mit einer Vielzahl von darauf befestigbaren Werkzeugen gegeben ist und die Spindel keine Bewegungen im Raum ausführt, weil die Bearbeitungsbewegungen durch den das Werkstück haltenden Werkstückhalter an der Spindel durchgeführt werden. Bewegende Spindeln unterliegen dem gyroskopischen Effekt und dadurch auch wirkenden Kräften. Diese Kräfte werden an das mechanische System der Bearbeitungseinheit abgegeben und dies kann negativen Einfluss auf die Stabilität der Bearbeitung nehmen. Eine starr mit dem Grundgerüst der Bearbeitungseinheit verbundene Spindel ist diesen Effekten nicht ausgesetzt.

Selbstverständlich ist die Erfindung nicht auf die Anordnung einer einzigen drehangetriebenen Spindel auf dem Werkzeughalter beschränkt. Es kann in einer anderen Ausgestaltung auch vorgesehen sein, dass mehrere drehangetriebene Spindeln mit darauf angeordneten Werkzeugen angeordnet sind, wobei jedoch im bevorzugten Anwendungsfall lediglich ein Werkzeughalter mit einer dort angeordneten drehangetriebenen Spindel angeordnet ist.

Der Werkstückhalter ist in diesem Fall bevorzugt als Mehrachs-Roboter ausgebildet und in einer besonders bevorzugten Ausgestaltung mindestens als 5-Achs-Roboter, der demnach in der Lage ist, in mindestens 5 verschiedenen Bearbeitungsachsen zu agieren. Er hat einen Bearbeitungskopf, der geeignet ist, ein zur Bearbeitung vorgesehenes Werkstück einzuspannen. Wichtig ist jedoch, dass er neben dem Einspannkopf für ein zu bearbeitendes Werkstück auch ein oder mehrere Handhabungsvorrichtungen aufweist, die geeignet sind, ein benötigtes Werkzeug aus einem Werkzeugspeicher zu entnehmen und dem Werkzeughalter zuzuführen, um dort dieses neue Werkzeug auf die drehangetriebene Spindel zu stecken oder in anderer Weise drehfest zu koppeln.

Gleichzeitig kann am Werkstückhalter eine weitere Halterung für das aus der Spindel zu entnehmende (alte) Werkzeug vorgesehen sein.

Ein Werkzeugwechsel sieht dann wie folgt aus:
Zunächst fährt der Werkstückhalter mit seiner Handhabungsvorrichtung nach unten und nimmt das in der Spindel noch aufgenommene alte Werkzeug auf.

An der an der gegenüberliegenden Seite des Werkstückhalters angeordneten weiteren Handhabungsvorrichtung wird ein neues Werkzeug aus dem Werkzeugspeicher entnommen. Sodann wird die Bearbeitungsvorrichtung um 180° gedreht, um so das alte, vorher aus der Spindel entnommene Werkzeug in den Werkzeugspeicher zurückzuführen und gleichzeitig das neue, nunmehr unten an der Bearbeitungsvorrichtung hängende Werkzeug der unten liegenden Spindel zuzuführen.

Durch die Anordnung von zwei einander gegenüberliegenden Handhabungsvorrichtungen an der mehrachsigen Bearbeitungsvorrichtung, wobei bevorzugt jede Handhabungsvorrichtung als Gabel ausgebildet ist, ergibt sich der Vorteil, dass ein besonders einfacher Werkzeugwechsel möglich ist.

Die jeweilige Gabel ist mit einer Steckaufnahme ausgerüstet, die geeignet ist, ein erstes Werkzeug aus dem Werkzeugspeicher zu entnehmen und die andere Handhabungsvorrichtung, die ebenfalls als Gabel ausgebildet ist, ist geeignet, das in der Steckvorrichtung der drehbar angetriebenen Spindel enthaltene alte Werkzeug ebenfalls in der Steckaufnahme der Gabel aufzunehmen.

Dadurch, dass der Werkstückhalter um 180° drehbar ist, ist immer eine Gabel oben und eine Gabel unten und es können immer zwei verschiedene Werkzeuge durch Anordnung in der oberen und unteren Gabel transportiert und gehandhabt werden.

Statt gabelartiger Handhabungsvorrichtungen für die Halterung eines Satzes von Werkzeugen können auch andere geeignete Handhabungsvorrichtungen verwendet werden.

Damit kann auf engstem Raum - weil der Werkzeugwechsler gleichzeitig am mehrachsigen Werkstückhalter angeordnet ist - eine Bearbeitungsvorrichtung geschaffen werden, die besonders klein und raumsparend ist.

In einer besonderen Ausgestaltung der Erfindung ist es vorgesehen, dass die gesamte Bearbeitungsvorrichtung als Tischgerät ausgebildet ist, so dass auf kleinstem Raum eine Bearbeitung von dentalen Bearbeitungsstücken, wie z. B. Kunststoff- oder Keramikzähnen und dergleichen, möglich ist.

In einer ersten Ausgestaltung der Erfindung ist es vorgesehen, dass der Werkstückspeicher als Drehteller ausgebildet ist und in einem vertikalen Abstand oberhalb der zu bearbeitenden Rohwerkstücke tragenden Werkstückwechslers ausgebildet ist.

Unter dem Werkstückwechsler, der ebenfalls als Drehteller ausgebildet ist, befindet sich dann der 5-Achs-Werkstückhalter, an dem - wie vorher ausgeführt - die Werkzeugwechsler angeordnet sind.

Vertikal unterhalb des Werkstückhalters ist dann der Werkzeughalter mit der mindestens einen drehangetriebenen Spindel zum Drehantrieb des einzigen Werkzeuges angeordnet.

Sofern nur eine einzige Spindel verwendet wird - die mit einer Vielzahl von Werkzeugen zu bestücken ist - kann auf die Anordnung einer solchen Spindel auf einem Drehteller verzichtet werden. Es reicht dann aus, die Spindel ortsfest an einer Grundplatte der Bearbeitungsvorrichtung anzuordnen.

In einer Weiterbildung der Erfindung kann es jedoch auch vorgesehen sein, dass mehrere Spindeln auf einem gemeinsamen Drehteller gleichmäßig am Umfang verteilt angeordnet sind, wobei man jeder Spindel ein anderes Werkzeug zuordnen kann.

Bei der Anordnung von mehreren Spindeln mit unterschiedlichen Werkzeugen besteht der Vorteil, dass der Werkstückhalter ohne Werkzeugwechsel eine Anzahl von verschiedenen Bearbeitungsvorgängen an verschiedenen Werkzeugen vornehmen kann.

Die Erfindung ist nicht darauf beschränkt, dass der Werkzeugspeicher vertikal oberhalb des die Werkstücke tragenden Werkstückwechslers angeordnet ist.

In einer anderen Ausgestaltung kann es auch vorgesehen sein, dass der Werkzeugspeicher auf einer anderen Ebene der Bearbeitungsvorrichtung angeordnet ist, z. B. unterhalb des Werkstückwechslers und oberhalb des Werkstückhalters oder auch unterhalb des Werkstückhalters und oberhalb des Drehtellers, auf dem die eine oder mehrere drehangetriebene Spindeln angeordnet sind.

Es wird jedoch bevorzugt, wenn der Werkzeugspeicher vertikal heb- und senkbar oberhalb des Werkstückwechslers angeordnet ist und auch der Werkstückwechsler drehbar und vertikal verschiebbar ausgebildet ist. Damit können diese beiden Einrichtungen (Werkzeugspeicher und Werkstückwechsler) auf den 5-Achs-Werkstückhalter zugestellt und weggestellt werden, was den Werkzeugwechsel und den Wechsel des Werkstückes beschleunigt.

In einer dritten Ausgestaltung der Erfindung kann es vorgesehen sein, dass statt der vorgeschlagenen Drehteller für den Werkstückwechsler und den Werkzeugspeicher nunmehr lineare Verschiebeantriebe verwendet werden. Statt der Drehbewegungen werden nun in dieser dritten Ausgestaltung die Werkzeuge auf einem Linearschlitten dem Werkstückhalter zugeführt, der mit seiner Handhabungsvorrichtung deshalb in besonders einfacher Weise die Werkstücke aus dem Werkstückspeicher entnehmen kann, weil dieser als verschiebbarer Schlitten ausgebildet ist.

Gleiches gilt auch für den Werkstückwechsler, an dem die zu bearbeitenden Werkstücke angeordnet sind und der in dieser bevorzugten Ausgestaltung ebenfalls als linear bewegbarer - bevorzugt horizontal bewegbarer - Schlitten ausgebildet ist.

Auch hier ergeben sich besonders einfache Zustellbewegungen zu dem Mehrachs-Werkstückhalter.

In gleicher Weise kann es bei diesem Ausführungsbeispiel vorgesehen sein, dass anstatt eines unteren Drehtellers als Werkzeughalter nunmehr ein Schlitten vorgesehen ist, der ebenfalls horizontal verschiebbar angetrieben ist, wobei auf diesem Schlitten ebenfalls ein oder mehrere drehangetriebene Spindeln mit jeweils dort angeordneten Werkzeugen angeordnet sind.

Anstatt der rotatorischen Anordnung (in der Art von Drehtellern) von Werkzeugspeicher, Werkstückwechsler und Werkzeughalter können demgemäß die genannten Elemente auch durch linear verschiebbare Schlittenanordnungen ersetzt werden.

Wichtig bei allen Ausführungsformen ist jedoch, dass der Werkzeugwechsler mit dem Mehrachs-Werkstückhalter verbunden ist und ein Teil mit diesem bildet, um so einen besonders gedrängten Aufbau zu erreichen.

Wie eingangs beschrieben, gilt bei allen Ausführungsformen, dass das im Werkstückhalter eingespannte Werkstück nunmehr mit Hilfe des Mehrachs-Werkstückhalters der einen oder den mehreren drehangetriebenen Spindeln zugeführt wird, weil auf den Spindeln jeweils die benötigten Werkzeuge zur spanabhebenden Bearbeitung des Werkstückes angeordnet sind.

Wie auch bei dem ersten, rotatorischen Ausführungsbeispiel (Drehteller) kann es in dieser dritten Ausgestaltung vorgesehen sein, dass lediglich nur eine einzige drehangetriebene Spindel vorhanden ist, die ortsfest an einer Grundplatte der Bearbeitungsvorrichtung angeordnet ist, wobei die Spindel mit einer Vielzahl von unterschiedlichen Werkzeugen nacheinander bestückbar ist.

Es gibt auch - in einer vierten Ausgestaltung - Mischformen zwischen den rotatorischen Gliedern, wie im ersten Ausführungsbeispiel beschrieben und linear verschiebbaren Gliedern, wie im dritten Ausführungsbeispiel beschrieben.

Bei dieser Mischform ist beispielsweise vorgesehen, dass die linear verschiebbaren Schlitten von Werkstückwechsler und Werkzeugspeicher nicht in horizontaler Richtung verschiebbar sind, sondern in vertikaler Richtung.

Sie können demnach einfache, in Y-Richtung verschiebbare Schlitten vorgesehen sein. Es ist jedoch auch möglich - bei allen Ausgestaltungen - die Schlitten auch als X-Y-Schlitten auszubilden.

Der das zu bearbeitende Werkstück tragende Werkstückhalter muss jedenfalls mindestens drei Achsen (X-, Y- und Z-Achse) bewältigen können und die dazugehörenden Dreh- und Schwenkbewegungen ausführen können, was zu einem mindestens 5-Achs-Werkstückhalter führt.

Die erfindungsgemäße Bearbeitungsvorrichtung ist besonders klein bauend und hat geringes Gewicht, so dass sie ohne Weiteres als Tischgerät in einer Zahnarztpraxis aufgestellt werden kann. Wenn die beschriebenen Funktionsteile nämlich Werkzeugspeicher, Werkstückwechsler und Werkzeughalter vertikal übereinander liegend angeordnet sind, können diese durch geeignete Abdeckhauben abgedeckt werden, so dass von dem Gerät nur noch die etwa mittige Bearbeitungsebene sichtbar ist. Diese mittige Bearbeitungsebene ist durch den im mittleren Ebenenbereich angeordneten Werkstückhalter und mindestens einer diesem zugeordneten Drehspindel gebildet.

Vorstehend wurde ausgeführt, dass die Werkzeuge an einem Drehteller angeordnet sind und dieser Drehteller vertikal oberhalb eines ebenfalls als Drehteller ausgebildeten Werkstückwechslers angeordnet ist, an die die zu bearbeitenden Rohteile (Werkstücke) angeordnet sind.

### 1. Ausführungsform

Bei der vorliegenden Erfindung wird eine bevorzugte Ausführungsform beschrieben, bei der aus (vertikalen) Platzersparnisgründen der Werkstückwechsler und der Werkzeugspeicher ineinander greifend im oberen Bereich der Bearbeitungsvorrichtung angeordnet sind. Zu diesem Zweck wird die Drehtellerfunktion durch eine Vielzahl von gleichmäßig am Umfang verteilt angeordneten Armen ersetzt, wobei jeder Arm etwa horizontal gerichtet ist und an seinem freien äußeren Ende auf einem inneren Kreis die vertikal nach unten gerichteten Werkzeuge trägt.

Radial auswärts von diesem Kreis sind auf einem weiteren umlaufenden Kreis weitere Arme angeordnet, die ebenfalls horizontal gerichtet sind, welche die erst genannten Arme des Werkstückspeichers übergreifen und an ihren vorderen freien Enden Steckvorrichtungen tragen, in welche die zu bearbeitenden Werkstücke eingesteckt sind.

Die Arme der oberen Ebene, die dem Werkstückspeicher zugeordnet sind, sind gemeinsam drehend angetrieben und sind getrennt von den Armen des Werkzeugspeichers, der in der darunter liegenden Ebene angeordnet ist und ebenfalls drehend angetrieben ist.

Anstatt von Drehtellern werden demzufolge radial auswärts gerichtete Arme in zwei übereinander liegenden und ineinander verschachtelten Ebenen verwendet, wobei jeder Arm an seinem radial äußeren Ende eine geeignete Steckvorrichtung für die Aufnahme entweder eines Werkstücks oder eines Werkzeuges aufweist.

Die obere Ebene der Arme (die z. B. dem Werkzeugspeicher zugeordnet sind) ist getrennt von der unteren, darunter liegenden Ebene des Werkstückwechslers drehend angetrieben.
Dadurch ergibt sich ein besonders einfacher vertikal übereinander liegender und gedrängter Aufbau von Werkzeugspeicher und Werkstückwechsler, was bisher noch nicht bekannt war.

### 2. Ausführungsform:

Merkmal der zweiten Ausführung der Erfindung ist, dass ausgehend von einem mittleren, mehrachsig bewegbar angetriebenen Werkstückhalter, in dem das zu bearbeitende Werkstück eingespannt und bewegbar angeordnet ist, gegenüberliegend auf der einen Seite ein Werkzeughalter mit einer Vielzahl von darauf angeordneten Werkzeugen vorgesehen ist, und gegenüberliegend zum Werkzeughalter ein Werkstückwechsler angeordnet ist, in dem die zu bearbeitenden Werkstücke auswechselbar aufgenommen sind.

Mit der gegebenen technischen Lehre ergibt sich der Vorteil eines vereinfachten Aufbaus, denn nunmehr kann mit einer Bearbeitungsvorrichtung eine automatische Bearbeitung einer Vielzahl von Werkstücken (Zähnen) vorgenommen werden, ohne dass es eines manuellen Eingriffes während der Bearbeitung bedarf.

Das zentrale Konzept der Erfindung beruht auf einer zentralen, bevorzugt vertikalen, Achse, um die sich zwei Rondelle unabhängig voneinander drehen. Dies ermöglicht das manuelle und/oder maschinelle Bestücken der Maschine mit Rohteilen während des Fräs- und Schleifvorganges und erhöht damit die Effizienz der Maschine. Durch den Werkstückwechsler muss der Bediener weniger mit der Maschine interagieren und erfährt dadurch eine Effizienzsteigerung.

Dies bedeutet, dass in einer bevorzugten Ausgestaltung das zu bearbeitende Werkstück in einem Werkstückhalter dreh-, senk- und schwenkbar aufgenommen ist und hierbei so bewegt werden kann, dass das dort eingespannte Werkstück in Richtung auf einen als Rondell ausgebildeten Drehteller zugefahren werden kann, auf dem eine Anzahl von drehangetriebenen Werkzeugen angeordnet ist.

Hierbei wird es bevorzugt, wenn die drehangetriebenen Werkzeuge auf dem Drehteller von mindestens einer Werkzeugspindel angetrieben sind. Dies bedeutet, dass lediglich im einfachsten Fall nur noch eine einzige drehangetriebene Werkzeugspindel vorhanden sein muss, und die Werkzeugspindel mit einer Anzahl von auf dem Drehteller angeordneten Werkzeugen kuppelbar ist.

Dadurch ergibt sich ein besonders einfacher und Raum sparender Aufbau, weil am Drehteller im einfachsten Fall nur lediglich eine einzige drehangetriebene Werkzeugspindel angeordnet sein muss, während beim Stand der Technik mindestens zwei derartiger drehangetriebener Werkzeugspindeln vorgesehen werden mussten.

In einer bevorzugten Ausgestaltung der Erfindung ist es jedoch auch vorgesehen, dass den Werkzeugen mehrere drehangetriebene Werkzeugspindeln zugeordnet sind, was jedoch nicht mit einer Erhöhung des Bauraumes verbunden ist, denn bezogen auf den vertikalen Bauraum ist es gleichgültig, ob eine einzige Werkzeugspindel oder mehrere angeordnet sind.

Sind mehrere Werkzeugspindeln vorgesehen, bedarf es nicht mehr einer Anzahl von Kupplungsvorgängen, um jeweils eine Werkzeugspindel mit einem Werkzeug zu kuppeln.

Damit eine möglichst effiziente Bearbeitung des Werkstückes vorgesehen sein kann, wird es bevorzugt, wenn der Werkstückhalter, an dem das zu bearbeitende Werkstück eingespannt ist, als X-Y-Z-Schlitten ausgebildet ist. Auf diese Weise wird dafür gesorgt, dass das eingespannte Werkstück in allen drei Raumrichtungen in jeder beliebigen Raumachse und Koordinate mit einem beliebigen Freiheitsgrad gedreht, geschwenkt und gezogen werden kann.

Statt der Verwendung von X-Y-Z-Schlitten können auch andere, frei im Raum bewegbare, steuerbare Vorrichtungen verwendet werden, wie zum Beispiel jeweils eine in den Raumkoordinaten X, Y und Z angeordnete drehangetriebene Gewindespindel oder allgemeine Stellelemente, die in allen drei Raumrichtungen X, Y, Z veränderbar angetrieben sind. Solche Stellelemente können auch Teil eines Mehrachsroboters sein, der zum Beispiel als 6-Achs-Roboter ausgebildet ist. Statt eines Mehrachs-Roboters kann auch ein Skalar-Roboter verwendet werden.

Die Erfindung ist demnach nicht auf die Anordnung von Schlittenelementen zur Halterung des zu bearbeitenden Werkstückes beschränkt.

Wesentliches Merkmal der Erfindung ist, dass dem Werkstückhalter gegenüberliegend ein Werkstückwechsler angeordnet ist, in dem eine Anzahl von zu bearbeitenden Werkstücken lösbar vorgehalten wird. Es handelt sich demnach um ein Werkstückmagazin, in dem die zu bearbeitenden Werkstücke entweder nach der Bearbeitung eingesteckt werden oder als Rohware aus dem Magazin entnommen werden, um in dem Werkstückhalter eingespannt und nachfolgend bearbeitet zu werden.

In einer bevorzugten Ausgestaltung der Erfindung ist der Werkstückwechsler als Drehteller ausgebildet, an dessen freien drehbaren Teil hintereinanderliegend die Roh-Werkstücke angeordnet sind. Ebenso können die fertig bearbeiteten Werkstücke an anderen Bearbeitungs- oder Steckpositionen eingesteckt werden.

Hierbei ist es jedoch nicht lösungsnotwendig, dass der Werkstückwechsler als Drehteller ausgebildet ist.

In einer anderen Ausgestaltung kann es vorgesehen sein, dass die zuzuführenden Roh-Werkstücke hinter- oder nebeneinander liegend in einem Magazin vorgehalten werden und aus diesem Magazin herausgenommen werden.

Statt eines Drehantriebs für den Werkstückwechsler können demzufolge auch lineare Antriebe für die Zuführung von Roh-Werkstücken und für die Abführung der bearbeiteten Werkstücke vorgesehen werden.

Mit der gegebenen technischen Lehre ergibt sich der Vorteil, dass eine Bearbeitungsvorrichtung nach der Erfindung für die Bearbeitung einer Vielzahl von Zähnen automatisch abläuft und keines manuellen Eingriffes mehr bedarf.

Ein Bearbeitungsvorgang unter Verwendung der zweiten Ausführung wird nun wie folgt abgewickelt:
In einem ersten Bearbeitungsschritt entnimmt der Werkstückhalter aus einem beliebigen Steckplatz ein Rohwerkstück aus dem Werkstückwechsler, spannt es ein und fährt in die Bearbeitungsposition in Richtung auf den unten angeordneten Werkzeughalter, der bevorzugt als Drehteller ausgebildet ist.

Es folgen nun eine Reihe von Bearbeitungsvorgängen, die alle oberhalb des Werkzeughalters und der dort drehangetriebenen Werkzeuge ablaufen.

Nach Vollendung der Bearbeitung fährt der Werkstückhalter mit dem noch eingespannten, fertig bearbeiteten Werkstück nach oben in Richtung auf den Werkstückwechsler, steckt das fertig bearbeitete Werkstück in einen freien Steckplatz und holt sich von einem anderen Steckplatz ein Roh-Werkstück ab, was er wiederum einspannt und einer neuen Bearbeitung am unteren Werkzeughalter zuführt.

Auf diese Weise kann eine Vielzahl von Werkstücken (Zähne) fertig bearbeitet werden, wobei eine Anzahl von 5 bis 15 Werkstücken bevorzugt wird. Es kann damit zum Beispiel eine komplette Gebisssanierung eines vorhandenen Gebisses mit künstlichen Zähnen vorgenommen werden, wobei alle Zähne nacheinanderfolgend bearbeitet werden, und ein manueller Eingriff nicht mehr erforderlich ist.

Der besondere Vorteil der Erfindung liegt in der kleinen Bauhöhe und den geringen Herstellungskosten, weil es für den Drehantrieb des Werkzeughalters nur eines einfachen Drehmotors bedarf und am Werkzeughalter ein oder mehrere Werkzeugspindeln angeordnet sind. Demnach ist eine solche Vorrichtung wegen ihrer geringen Außenabmessungen, verbunden mit einer zeitsparenden Herstellung von künstlichen Zähnen ideal für die Aufstellung in einer Zahnarztpraxis geeignet.

Es ist besonders Raum sparend, wenn der Werkstückhalter als X-Y-Z-Schlitten ausgebildet ist, der in einer vertikalen Achse heb- und senkbar ausgebildet ist, und demzufolge in der einen Richtung auf den Werkzeughalter und in der entgegengesetzten Richtung auf den Werkstückwechsler zu- und wegstellbar ist.

Auch ergibt sich ein geringer Raumbedarf dann, wenn auch der Werkstückwechsler als Drehteller ausgebildet ist, weil hier ein klein bauender Drehantrieb verwendet wird und weitere Maßnahmen nicht mehr erforderlich sind.

Die Erfindung ist nicht auf die Drehtellerausbildung des Werkstückhalters und des Werkstückwechslers sowie auf den X-Y-Z-Schlitten für den Werkstückhalter beschränkt.

In einer anderen Ausgestaltung der Erfindung kann es vorgesehen sein, dass ein oder mehrere der vorgenannten drei Elemente (Werkzeughalter, Werkstückhalter, Werkstückwechsler) als linear angetriebene Konstruktionsteile ausgebildet sind. Statt eines Drehantriebes können also ein oder mehrere der vorgenannten Elemente auch linear angetrieben sein.

Ebenso kann dem Linearantrieb noch ein zusätzlicher Drehantrieb überlagert werden.

Ferner ist die Erfindung nicht darauf beschränkt, dass der Werkstückhalter als X-Y-Z-Schlitten ausgebildet ist.

Er kann in einer anderen Ausgestaltung auch als Drehteller ausgebildet sein, an dessen Außenumfang die zu bearbeitenden mehreren Werkstücke angeordnet sind.

Dies hat den Vorteil, dass in einem einzigen Arbeitsgang auch mehrere Werkstücke bearbeitet werden können, weil im Werkstückhalter eine Anzahl von möglicherweise auch gleichzeitig zu bearbeitenden Werkstücken angeordnet ist.

Der Begriff "Werkstück" bei der vorliegenden Erfindung wird weit gefasst. Die Erfindung betrifft nicht nur die Herstellung künstlicher Zähne, sondern auch anderer Zahnteile aus dem dentalen Bereich. Dies sind zum Beispiel Abutments-Teile von Implantaten oder Gingiva-Former und dergleichen. Es ist also nicht nur eine Kunststoffbearbeitung von künstlichen Zähnen vorgesehen, sondern auch eine Metallbearbeitung der oben genannten anderen Teile.

Aus diesem Grund ist die Bearbeitungsvorrichtung nach der Erfindung für die Bearbeitung von allen Teilen für dentale Anwendungen geeignet.

Der Erfindungsgegenstand der vorliegenden Erfindung ergibt sich aus dem Gegenstand der beigelegten Patentansprüche.

Im Folgenden wird die Erfindung anhand von lediglich einen Ausführungsweg darstellenden Zeichnungen näher erläutert. Hierbei gehen aus den Zeichnungen und ihrer Beschreibung weitere erfindungswesentliche Merkmale und Vorteile der Erfindung hervor, so lange sie unter dem Schutzumfang der beigelegten Ansprüche fallen.

Es zeigen:
Figur 1: perspektivische Ansicht einer ersten Ausführungsform
Figur 2: perspektivische Ansicht einer von der ersten Ausführung abweichenden zweiten Ausführung
Figur 3: perspektivische Ansicht einer dritten Ausführung mit linear angetriebenen Schlitten
Figur 4: eine gegenüber Figur 3 abgewandelte Ausführung
Figur 5: eine weitere, gegenüber Figur 3 abgewandelte Ausführung
Figur 6: die Ansicht der Bearbeitungsvorrichtung als Tischgerät
Figur 7: das Gerät nach Figur 6 mit abgenommener oberer Abdeckhaube
Figur 8: das Gerät nach Figur 7 mit einer Ansicht schräg von unten
Figur 9: das Gerät nach den Figuren 6 bis 8 in Seitenansicht bei entfernten Abdeckhauben
Figur 10: eine Detailansicht des Geräts nach Figur 9
Figur 11: eine Prinzipdarstellung einer gegenüber Figur 1 bis 5 abgewandelten Ausführung
Figur 12: eine gegenüber Figur 11 abgewandelte Ausführung
Figur 13: eine weitere, gegenüber Figur 11 abgewandelte Ausführung
Figur 14: eine dritte gegenüber Figur 11 abgewandelte Ausführung
Figur 15: eine vierte gegenüber Figur 11 abgewandelte Ausführung
Figur 16: eine perspektivische Darstellung eines Gerätes mit einer fünften Ausführung
Figur 17: die Seitenansicht der Ausführung nach Figur 16
Figur 18: die um 90 Grad gedrehte Ansicht im Vergleich zur Figur 17
Figur 19: die Draufsicht auf die Anordnung nach Figur 16-18

In der nachfolgenden Figurenbeschreibung werden für die gleichen Teile die gleichen Bezugszeichen verwendet. Wenn ein Teil mit einem bestimmten Bezugszeichen ausreichend beschrieben wurde, gilt diese Beschreibung für sämtliche anderen, nachfolgend genannten Teile mit dem gleichen Bezugszeichen. Es wird demgemäß darauf verzichtet, für Teile mit gleichen Bezugszeichen stets die gleiche Beschreibung vorzulegen.

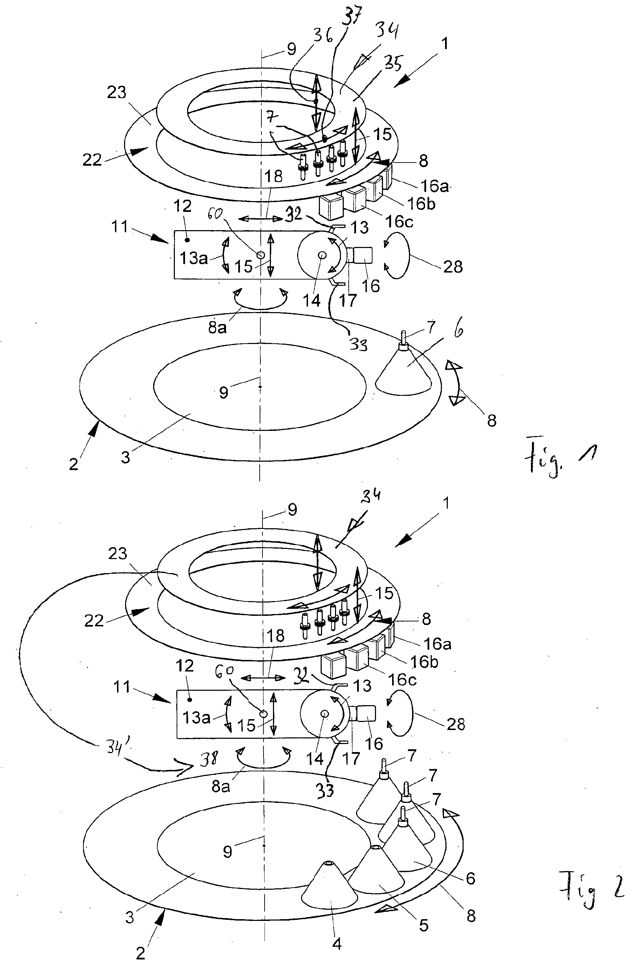

Die Bearbeitungsvorrichtung 1 nach Figur 1 und 2 besteht im Wesentlichen aus einem unteren Drehteller 3, der als Werkzeughalter 2 ausgebildet ist und auf dem in einem ersten bevorzugten Ausführungsbeispiel lediglich eine einzige drehangetriebene Werkzeugspindel 6 angeordnet ist, deren Drehantrieb nicht näher dargestellt ist.

Die Werkzeugspindel 6 hat eine geeignete Kupplungsvorrichtung, z. B. eine Steckkupplung, in die ein Werkzeug 7 eingesteckt und gekuppelt wird. In der vertikalen Ebene oberhalb des Werkzeughalters 2 ist der erfindungsgemäße Werkstückhalter 11 angeordnet, der bevorzugt als 5-Achs-Manipulator oder 5-Achs-Roboter ausgebildet ist. Er besteht aus einem Grundkörper 12 und kann alle in den eingezeichneten Pfeilrichtungen (Kipprichtung 13a, Verschieberichtung in Pfeilrichtung 18 in der X-Achse) eine Drehbewegung in Pfeilrichtung 8a und eine Linearverschiebung in den Pfeilrichtungen 15 durchführen.

Zusätzlich trägt er einen Bearbeitungskopf, der in der Schwenkachse 14 in der eingezeichneten Kipprichtung 13 verschwenkbar ist. Am Bearbeitungskopf ist eine Werkstückaufnahme 17 angeordnet, die bevorzugt als Steckaufnahme ausgebildet ist, in welche ein zu bearbeitendes Werkstück 16 eingesteckt werden kann.

Das Werkstück 16 wird somit zwecks Bearbeitung in der Werkstückaufnahme 17 drehfest gekuppelt, und der Drehantrieb für die Bewegung des Werkstücks 16 kann beispielsweise in den Pfeilrichtungen 28 erfolgen.

Am Werkstückhalter 11 ist bevorzugt eine Handhabungsvorrichtung angeordnet, die aus zwei übereinander liegend angeordneten Gabeln 32, 33 besteht, wobei die Gabeln geeignete Steckvorrichtungen haben, um ein Werkzeug 7 aus einem darüber angeordneten Werkzeugspeicher 34 zu entnehmen und auf die Steckaufnahme der Werkzeugspindel 6 zu stecken.

Andererseits kann z. B. mit der unteren Gabel 33 das nicht mehr gebrauchte Werkzeug 7 aus der Werkzeugspindel 6 entnommen werden und in den Werkzeugspeicher 34 zurückgebracht werden.

In einer bevorzugten Ausgestaltung ist der Werkzeugspeicher 34 in der Pfeilrichtung 36 heb- und senkbar ausgebildet und ist um die gemeinsame Drehachse 9 drehbar in Pfeilrichtung 37 angetrieben.

In der Ebene unterhalb des Werkzeugspeichers 34 ist ein weiterer Drehteller 23 angeordnet, der einem Werkstückwechsler 22 zugeordnet ist.

Am Werkstückwechsler 22 sind eine Vielzahl von gleichmäßig am Umfang verteilt angeordneten, zu bearbeitenden Werkstücken 16a, 16b, 16c angeordnet.

Auch dieser Drehteller 22 ist bevorzugt in Pfeilrichtung 8 drehbar angetrieben.

Die Entnahme eines zu bearbeitenden Werkstücks 16 erfolgt einfach dadurch, dass der Werkstückhalter 11 mit seinem vorderen Bearbeitungskopf und der dort angeordneten Werkstückaufnahme nach oben in Richtung auf den Werkstückwechsler 22 fährt, dort ein Rohwerkstück angekoppelt oder eingespannt wird und der Werkstückhalter 11 wieder in seine Grundposition fährt.

Zur Bearbeitung eines Werkstücks 16, welches in der Werkstückaufnahme 17 des Werkstückhalters 11 eingespannt ist, wird der Werkstückhalter 11 nach unten in Pfeilrichtung 15 entlang der Drehachse 9 verfahren und das zu bearbeitende Werkstück gelangt durch die mehrachsige Verschiebung des Werkstückhalters 11 in den Bereich des in der Werkzeugspindel 6 eingespannten und drehend angetriebenen Werkzeugs 7, wo es einer Anzahl von Bearbeitungsschritten unterworfen wird.

Die Figur 2 zeigt in Abweichung von Figur 1, dass es nicht lösungsnotwendig ist, den Werkzeugspeicher 34 in der obersten Ebene anzuordnen. Durch einen Pfeil 34' ist angedeutet, dass der Werkzeugspeicher 34 auch bei Position 38 angeordnet werden kann, nämlich in der Ebene oberhalb des Werkzeughalters 2.

Das Ausführungsbeispiel nach Figur 2 zeigt auch, dass es möglich ist, anstatt einer einzigen Werkzeugspindel 6 nach Figur 1 - die an und für sich auch ohne Drehteller 3 betrieben werden kann - nunmehr eine Mehrzahl von drehangetriebenen Werkzeugspindeln 4, 5, 6 auf einem gemeinsamen Drehteller 3 anzuordnen, so dass das in dem Werkstückhalter 11 eingespannte Werkstück 16 nacheinander folgend in geringem Abstand einer Vielzahl von mit unterschiedlichen Werkzeugen bestückten Werkzeugspindeln 4, 5, 6 zugeführt werden kann.

Wie vorhin ausgeführt, kann demnach nach dem Ausführungsbeispiel nach Figur 1 der Drehteller 2 entfallen, während er nach dem Ausführungsbeispiel nach Figur 2 vorhanden ist und in Pfeilrichtung 8 drehbar antreibbar ist.

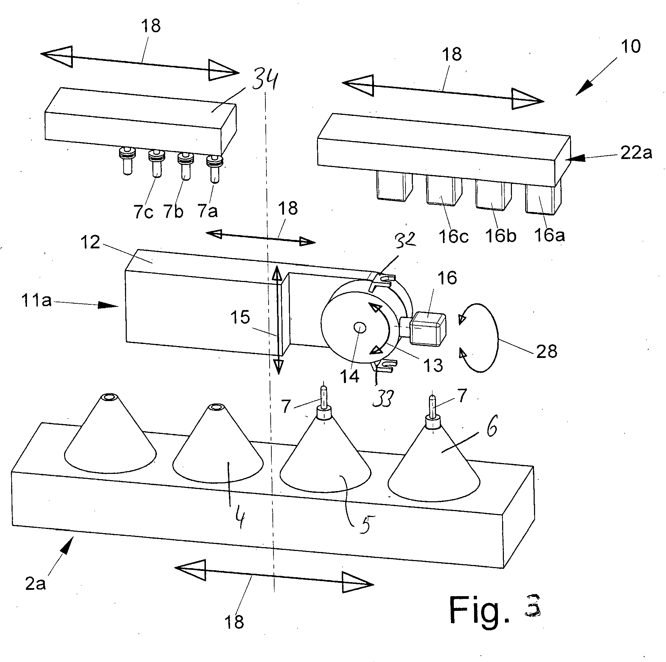

Die Figur 3 zeigt, dass alle rotatorisch angetriebenen Teile nach den Figuren 1 und 2 auch durch linear bewegbare Schlitten ersetzt werden können. Für die gleichen Teile gelten die gleichen Bezugszeichen. Hier ist erkennbar, dass der Werkzeugspeicher nunmehr als linear in Pfeilrichtung 18 angetriebene Schlitten ausgebildet sein kann, an dem unterseitig die Werkzeuge 7, 7a, 7b, 7c angeordnet sind.

Es wird demnach eine prinzipiell andere Bearbeitungsvorrichtung 10 als im Vergleich zu der Bearbeitungsvorrichtung 1 beschrieben, weil die Bearbeitungsvorrichtung 1 nach den Figuren 1 und 2 mit rotatorisch bewegten Teilen arbeitet, während das Ausführungsbeispiel der Bearbeitungsvorrichtung 10 nach Figur 3 mit translatorisch bewegbaren Modulen arbeitet.

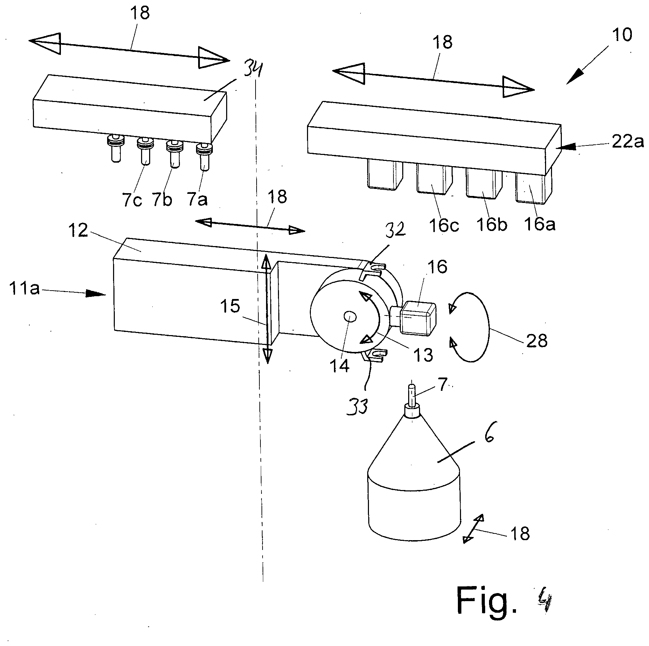

Anstatt der Anordnung von mehreren drehangetriebenen Werkzeugspindeln 4-6, die jeweils ein andersartiges Werkzeug 7 tragen können, ist in Figur 4 vorgesehen, dass lediglich eine einzige drehangetriebene Werkzeugspindel 6 mit einem darin auswechselbaren angeordneten Werkzeug 7 vorgesehen ist. Es kann demnach auf die translatorisch bewegbaren Schlitten nach Figur 3 verzichtet werden.

Bei beiden Ausführungsformen nach Figur 3 und 4 ist gut erkennbar, dass die Handhabungsvorrichtungen für den Werkzeugwechsel als Steckgabeln 32, 33 ausgeführt sind, womit ein besonders schneller und einfacher Werkstückwechsel der Werkzeuge 7 von dem Werkzeugspeicher 34 in Richtung auf die Werkzeugspindel 4-6 erfolgen kann.

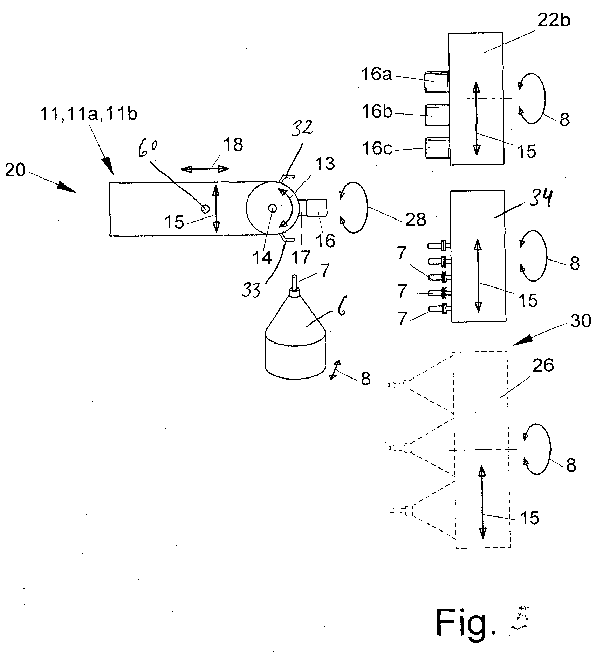

Die Figur 5 zeigt eine Weiterbildung der Ausführung nach Figur 4, wo erkennbar ist, dass der translatorisch bewegbare Schlitten nach Figur 3, welcher die Mehrzahl von Werkzeugspindeln 4-6 trägt, auch vertikal angeordnet sein kann und die verschiedenen Module vertikal fluchtend untereinander angeordnet sind.

Lediglich der Vollständigkeit halber ist dargestellt, dass die so gebildete Bearbeitungsvorrichtung 20 ebenfalls mit einem Werkstückhalter 11, 11a, 11b arbeitet und der Werkstückhalter in einer Dreh- und Schwenkachse 60 dreh- und schwenkbar gelagert ist.

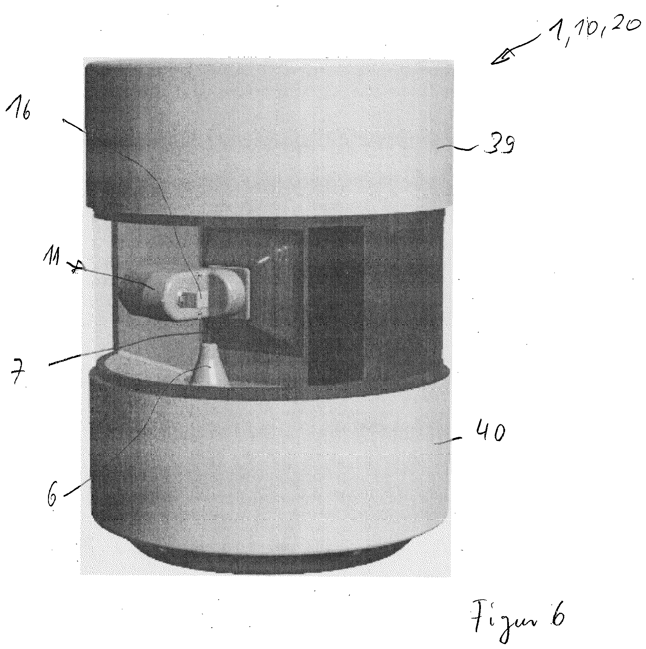

Die Figur 6 zeigt eine praktische Ausführung einer Bearbeitungsvorrichtung 1, 10, 20, wie sie vorstehend anhand der Figuren 1 bis 5 dargestellt wurde.

Der obere Bereich ist durch eine obere Abdeckhaube 39 abgedeckt, während der untere Bereich durch eine untere Abdeckhaube 40 abgedeckt ist.

Der mittlere Bearbeitungsbereich ist freigelassen, und dort ist der Werkstückhalter 11 mit dem zu bearbeitenden Werkstück 16 sichtbar, der gerade in Richtung auf ein drehangetriebenes Werkzeug 7 fährt, das in einer Werkzeugspindel 6 eingespannt ist.

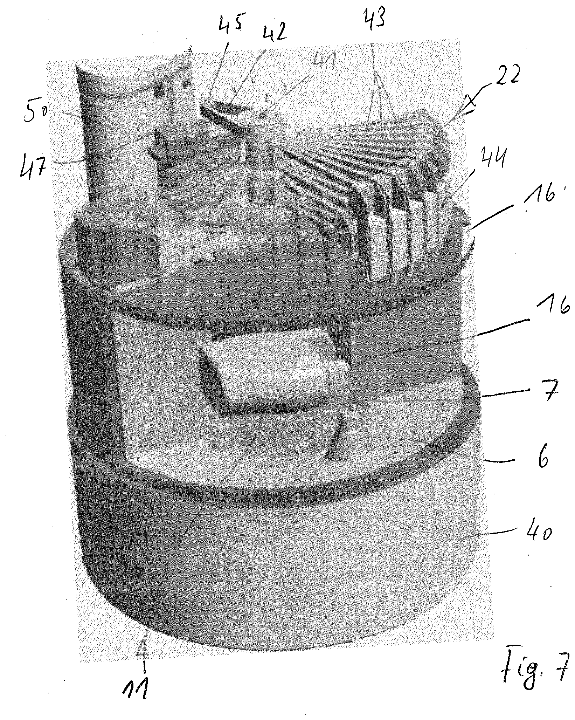

Die Figur 7 zeigt die Bearbeitungsvorrichtung 1, 10, 20 nach Figur 6 mit entfernter oberer Abdeckhaube 39. Dort ist erkennbar, dass die Werkstücke 16 jeweils in einer zugeordneten Steckvorrichtung 44 im Werkstückwechsler aufgenommen sind und der Werkstückwechsler aus einer Anzahl von Haltearmen 43 besteht, wobei jeder Haltearm aus einem horizontalen Abschnitt besteht, der an seinem vorderen freien Ende vertikal nach unten abknickt und an seinem vertikalen unteren Ende die Steckvorrichtung 44 für die Aufnahme des zu bearbeitenden Werkstückes 16 aufweist.

Ebenso ist erkennbar, dass der Drehantrieb aller Haltearme, die gemeinsam drehfest miteinander verbunden ist, über einen Motor erfolgt, dessen Motorachse 44 über einen Treibriemen 46 die Antriebsachse 41 des Werkstückwechslers 22 drehbar antreibt.

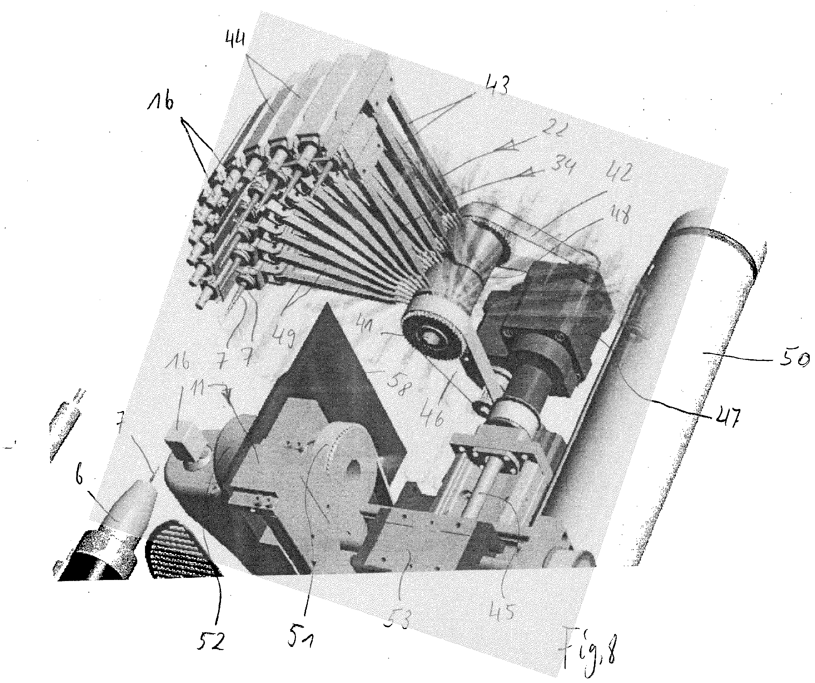

Ferner ist noch ein Getriebe 47 vorgesehen, dessen Funktion anhand der Figur 8 näher beschrieben wird.

Am hinteren Teil der Bearbeitungsvorrichtung 1, 10, 20 ist ein Flüssigkeitstank 15 erkennbar.

Die Figur 8 zeigt eine perspektivische Unteransicht der Anordnung nach Figur 7, wo erkennbar ist, dass auf einer inneren und unteren Ebene der Werkzeugspeicher 34 unterhalb des Werkstückwechslers 22 angeordnet ist und der Werkzeugspeicher 34 wiederum aus einer Anzahl von radial gleichmäßig am Umfang verteilt angeordneten und sich nach außen erstreckenden Haltearmen 49 besteht, wobei an jedem freien Ende jedes Haltearmes eine Steckvorrichtung für die Aufnahme eines dort eingesteckten Werkzeuges 7 vorgesehen ist.

Demnach befinden sich die Haltearme 43 des Werkstückwechslers 22 in einer oberen horizontalen Ebene dicht über den Haltearmen 49 des darunter angeordneten Werkzeugspeichers 34, wobei die Werkzeuge 7 des Werkzeugspeichers 34 auf einem kleineren Radius liegen als vergleichsweise die weiter außen liegenden Werkstücke 16 des Werkstückwechslers 22.

Aus Figur 8 ist auch erkennbar, dass die Motorachse 45 über eine Kupplung und ein zugeordnetes Getriebe 47 den oberen Treibriemen 42 für den Werkstückwechsler 22 antreibt, während der radial innen liegende und unter dem Werkstückwechsler 22 angeordnete Werkzeugspeicher 34 durch einen weiteren Treibriemen 46 drehbar angetrieben ist.

Die beiden Antriebe sind unabhängig voneinander und sind durch eine Trennfuge 48 voneinander getrennt, sind aber koaxial auf der gleichen Antriebsachse 41 angeordnet.

Es sind noch Teile des Schlittenantriebs für die Dreh-, Schwenk- und Verschiebebewegungen der Bearbeitungsvorrichtung 10 schematisiert dargestellt.

Es sind zwei unabhängig voneinander angetriebene Antriebswellen sichtbar, von denen lediglich die Treibriemen 51 und 52 in Figur 8 erkennbar sind.

Ferner ist ein Schlittenantrieb 53 schematisiert dargestellt, und es ist erkennbar, dass das zu bearbeitende Werkstück 16 nunmehr mit dem Mehrachs-Werkstückhalter 11 an die feststehende Spindel 6 mit dem drehangetriebenen Werkzeug 7 zugestellt wird.

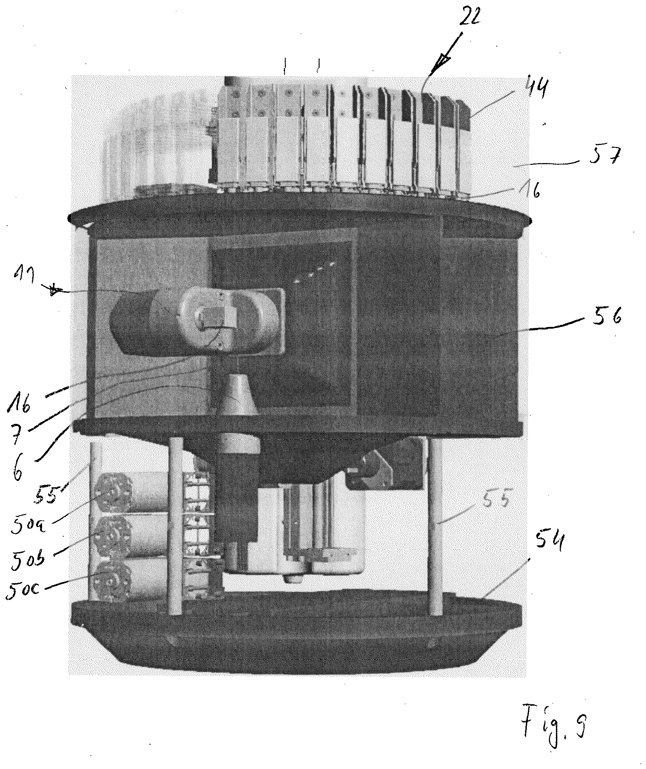

Die Figur 9 zeigt weitere Einzelheiten des vorher beschriebenen Gerätes, wo lediglich in der Seitenansicht die radial außen liegenden Teile des Werkstückwechslers 22 erkennbar sind, ferner die dem Werkstückwechsler 22 zugeordneten Steckvorrichtungen für die Aufnahme der Werkstücke 16.

Man erkennt ferner drei übereinander liegende Ebenen, nämlich die Ebene des Oberteils 57, die darunter liegende Ebene des Mitteilteils 56 und die darunter liegende Ebene einer Grundplatte 54, auf der Ständer 55 angeordnet sind, welche das Mittelteil 56 tragen.

Dem Mehrachs-Werkstückhalter 11 ist im Übrigen eine flexible Abdeckung 58 zugeordnet, die das Eindringen von Spänen bei der Bearbeitung eines Werkstücks 16 mit dem Werkzeug 7 in den Innenraum des Gerätes verhindert.

Es sind auch noch eine Reihe von weiteren Flüssigkeitstanks 50a, 50b, 50c dargestellt.

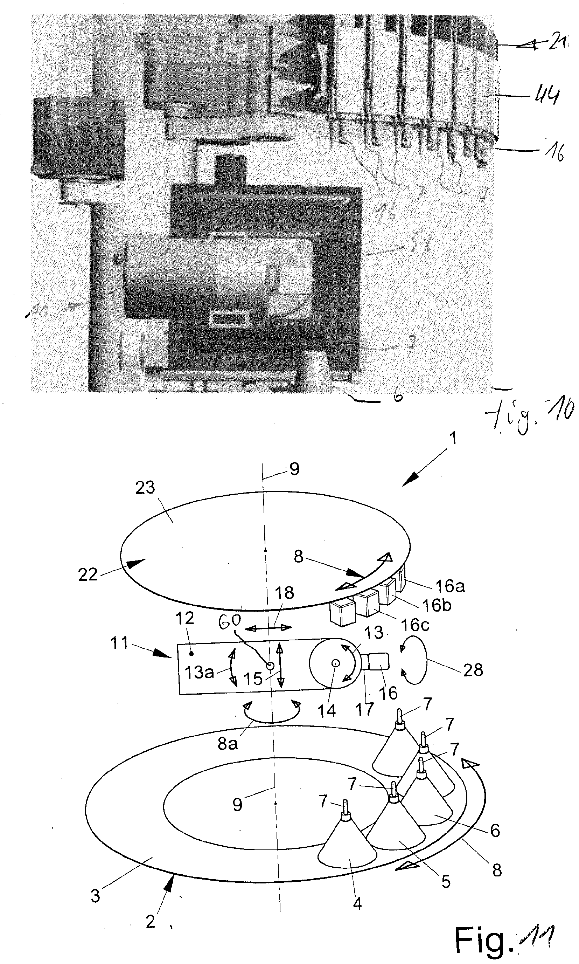

Die Figur 10 zeigt ein Detail der Bearbeitungsvorrichtung 1, 10, 20 entsprechend der vorstehenden Beschreibung, wo die gleichen Teile mit den gleichen Bezugszeichen versehen sind.

Es ist erkennbar, dass die zu bearbeitenden Werkstücke 16 radial auswärts vor den dahinter liegenden Werkzeugen 7 des Werkzeugspeichers 34 gelagert sind.

In Figur 11 (und allen anderen Ausführungen) ist eine zentrale vertikale Drehachse 9 vorhanden, um die herum ein Werkzeughalter 2 drehbar in den Pfeilrichtungen 8 gelagert ist, der in einer bevorzugten Ausgestaltung als Drehteller 3 ausgebildet ist. Er ist durch einen nicht näher dargestellten Drehmotor angetrieben.

Auf dem Drehteller 3 sind eine Anzahl von separat drehangetriebenen Werkzeugspindeln 4, 5, 6 angeordnet, wobei jeder Werkzeugspindel 4-6 ein (möglicherweise) unterschiedliches Werkzeug 7 zugeordnet ist. Das eine Werkzeug 7 kann beispielsweise als Zahnfräser, das zweite Werkzeug als Stiftfräser, das dritte Werkzeug als Schleifrad und dergleichen ausgebildet sein.

Oberhalb des Drehtellers 3 ist ein Werkstückhalter 11 angeordnet, der in einem bevorzugten Ausführungsbeispiel als X-Y-Z-Schlitten 25, 26, 31 ausgebildet ist.

Im Ausführungsbeispiel nach Figur 11 sind die jeweiligen Drehrichtungen und Bearbeitungsrichtungen dargestellt. Es ist erkennbar, dass etwa ein zylinderförmiger Grundkörper 12 in den Pfeilrichtungen 15 in vertikaler Richtung wahlweise dem unteren Drehteller 3 oder einem oberen Werkstückwechsler 22 zugestellt werden kann. Ferner kann der Grundkörper 12 um eine horizontale Achse in der Kipprichtung 13a angetrieben sein. In einer alternativen Ausführungsform kann es vorgesehen sein, dass der Grundkörper 12 nicht in der Kipprichtung 13a angetrieben ist, sondern dass vielmehr das vorne eingespannte Werkzeug 16, welches in einer Werkstückaufnahme 17 drehbar eingespannt ist, in der Kipprichtung 13 um eine Schwenkachse 14 schwenkbar und kippbar angetrieben ist. Ferner kann der Grundkörper 12 auch noch in den Pfeilrichtungen 18 verschiebbar sein.

So wird eine Verschiebung in der Papierebene der Figur 11 in den Pfeilrichtungen 27 vorgesehen, sodass das in der Werkstückaufnahme 17 eingespannte Werkzeug 16 in jeder beliebigen Raumkoordinate X, Y, Z verschiebbar und einstellbar ausgebildet ist.

Zur Bearbeitung wird das in der Werkstückaufnahme 17 eingespannte Werkstück 16 nach unten in Pfeilrichtung 15 auf den Werkzeughalter 2 zugestellt und wird durch entsprechend gesteuerte Verschwenkung, Drehung und Verschiebung solange bearbeitet, bis das Werkstück 16 fertig bearbeitet ist.

Nach erfolgter Bearbeitung wird der Werkstückhalter 11 in Pfeilrichtung 15 nach oben in Richtung auf einen Werkstückwechsler 22 zugeführt, der bevorzugt in einer ersten Ausgestaltung ebenfalls als Drehteller 23 ausgebildet ist. Der Werkstückwechsler 22 ist um die vertikale Achse 9 in den Pfeilrichtungen 8 drehbar angetrieben und hat an seinem Außenumfang eine Anzahl von Werkstücken 16a, 16b, 16c, die alle entweder schon bereits fertig bearbeitet sind oder die als Roh-Werkstücke vom Werkstückhalter 11 abgeholt werden, in die Werkstückaufnahme 17 eingespannt und einer Bearbeitung zugeführt werden.

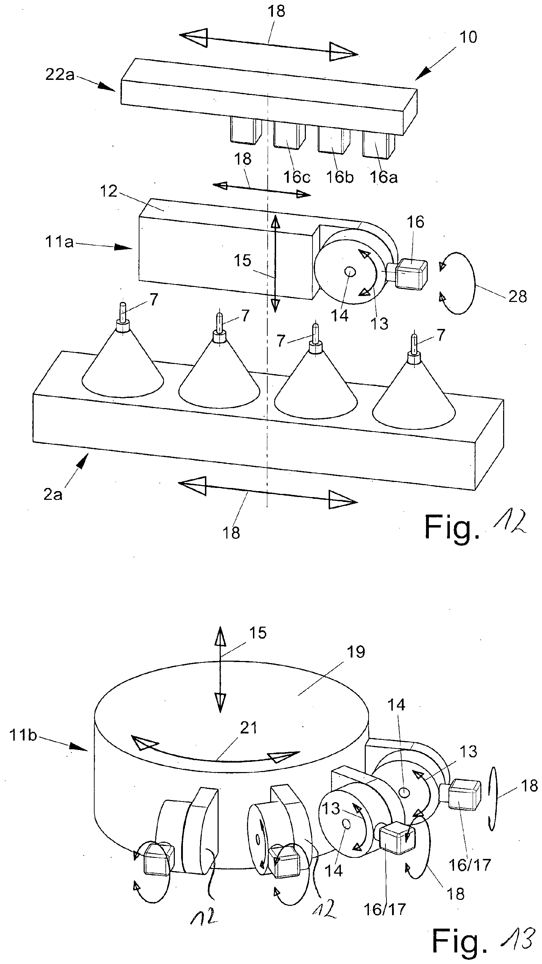

Die allgemeine Grundform der Bearbeitungsvorrichtung 1 nach Figur 11 kann in vielfältiger Weise geändert werden. Die Figur 12 zeigt als Ausführungsbeispiel eine andere Ausführungsform einer Bearbeitungsvorrichtung, bei der erkennbar ist, dass der Werkstückwechsler 22a als linear bewegbares Bauteil ausgebildet ist, welches in den Pfeilrichtungen 18 veränderbar ist und welches gegebenenfalls - in einer anderen Ausgestaltung - auch noch in Pfeilrichtung 8 drehbar ausgebildet sein kann.

Ebenso ist in dem Ausführungsbeispiel nach Figur 12 erkennbar, dass der Werkstückhalter 11 nach Figur 11 in seiner Ausführung als Werkstückhalter 11a in Figur 12 als linear bewegbares Bauteil ausgebildet ist, welches heb-, senk- und schwenkbar an der vertikalen Drehachse 9 gelagert ist. Es wird demnach ganz allgemein angegeben, dass der Werkstückhalter 11a in allen drei Raumachsen verschiebbar, drehbar und einstellbar ausgebildet ist, ohne dass es der Anordnung von Schlittenelementen, wie der Schlitten 25, 26, 31, bedarf.

Die Figur 12 zeigt außerdem, dass auch die Ausbildung des Werkzeughalters 2 als Drehteller entfallen kann und stattdessen ein Werkzeughalter 2a als linear verschiebbares Element vorgesehen sein kann.

In Ergänzung zu Figuren 11 und 12 zeigt die Figur 13 auch noch, dass der Werkstückhalter 11b nicht notwendigerweise als dreidimensional verschiebbarer Schlitten ausgebildet sein kann, sondern er kann auch aus einem Drehteller 19 bestehen, der in den Pfeilrichtungen 21 drehangetrieben ist, wobei an dessen Außenumfang eine Vielzahl von unterschiedlichen Werkstückaufnahmen zum Einspannen von zu bearbeitenden Werkstücken 16 vorgesehen ist. Somit wird im Ergebnis auch eine dreidimensionale Bewegung der dort in den einzelnen Werkstückaufnahmen 17 eingespannten Werkstücke erreicht, wobei jedoch bei dieser Ausführung die Werkstücke parallel und möglicherweise auch gleichzeitig von den Werkzeugen 7 im Bereich des Werkzeughalters 2 bearbeitet werden können.

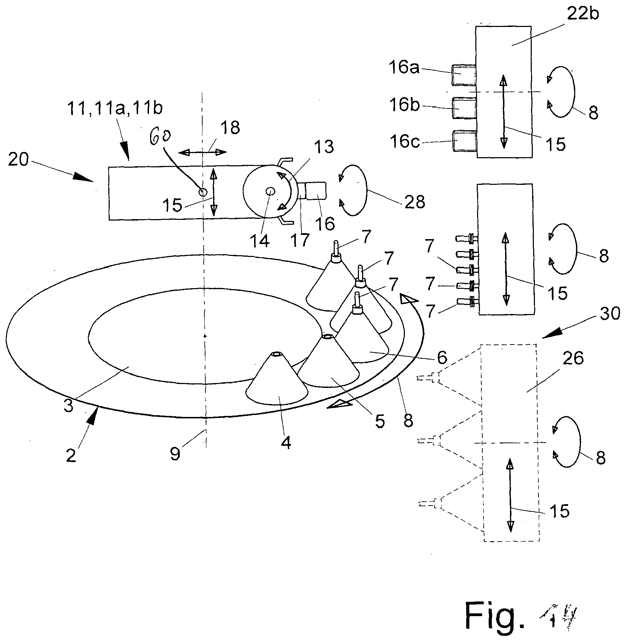

Die Figur 14 zeigt eine weitere Abwandlung zu den Ausführungsformen der Figuren 11 bis 13, wobei jedes der vorgenannten drei Elemente gegeneinander ausgetauscht werden kann und die Kombination, die in Figur 14 dargestellt ist, nicht den Erfindungsgedanken beschränken soll.

Es ist dargestellt, dass der Werkzeughalter 2 durch ein linear in vertikaler Richtung bewegbares Element 2b ersetzt werden kann, sodass statt einer horizontalen Drehbewegung eine vertikale Verschiebebewegung und gegebenenfalls auch noch eine hierzu gehörende Drehbewegung in Pfeilrichtung 8 vorkommen.

Was also in Figur 14 rechts in gestrichelten Linien dargestellt ist, soll verdeutlichen, dass das linear bewegliche und gegebenenfalls drehbare Element auch den Drehteller 3 des Werkzeughalters 2 ersetzen kann.

Gleiches gilt auch für den oberen Werkstückwechsler 22, der zwar als Drehteller 23 ausgebildet sein kann, aber auch ersetzt sein kann durch ein linear bewegbares Element, welches in den Pfeilrichtungen 15 vertikal verschiebbar und gegebenenfalls auch drehbar in den Pfeilrichtungen 8 ausgebildet ist.

Alle Elemente in der Figur 14 können also in beliebiger Weise untereinander kombiniert werden.

Deshalb ist in Figur 14 eine erste Art einer Bearbeitungsvorrichtung 20 angegeben, die darin besteht, dass der Werkzeughalter 2 als Drehteller 3 ausgebildet ist, dass der Werkstückhalter 11 in seiner Ausführungsform nach 11a oder 11b ausgebildet ist, und der Werkstückwechsler 22b nunmehr als linear bewegbares Element ausgebildet ist.

Ebenso zeigt die Figur 14 auf der rechten Seite, dass eine andere Art einer Bearbeitungsvorrichtung 30 vorgesehen sein kann, die darin besteht, dass der Werkstückwechsler 22b vorhanden ist, ebenso wie der Werkstückhalter 11a oder 11b oder 11, dass aber der Werkzeughalter 2b als linear bewegbares Element, welches gegebenenfalls auch drehbar angetrieben ist, ausgebildet ist.

Alle zeichnerisch in den Figuren 11 bis 14 dargestellten Elemente können in jeder beliebigen Kombination untereinander eine Bearbeitungsvorrichtung 1 bilden.

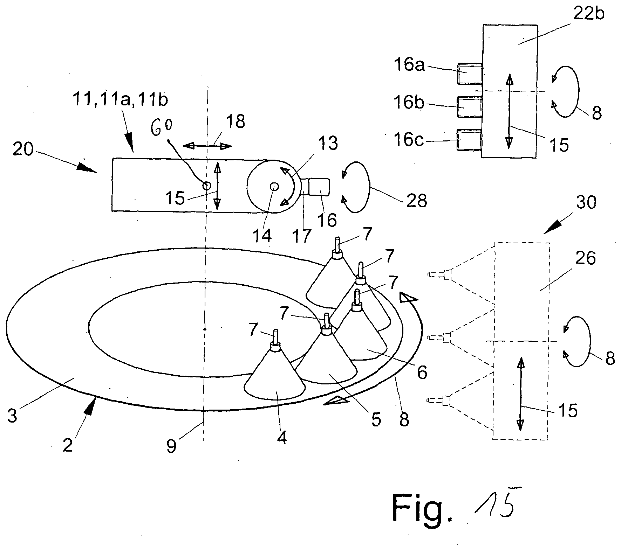

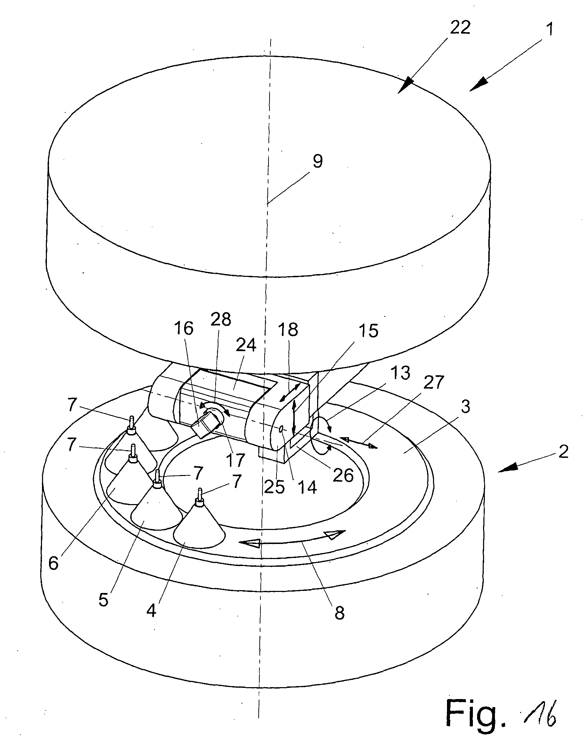

Die Figuren 15 bis 19 zeigen eine bevorzugte Ausgestaltung der Erfindung in der Art einer Bearbeitungsvorrichtung 1, die schematisiert in Figur 11 dargestellt wurde.

Der Werkzeughalter besteht aus einem Drehteller 3, der drehangetrieben in einer Gehäuseschale angeordnet ist und in dem eine Anzahl von getrennt angetriebenen Werkzeugspindeln 4, 5, 6 angeordnet sind, wobei jede Werkzeugspindel 4-6 mit einem unterschiedlichen Werkzeug 7 ausgestattet ist.

Oberhalb des Werkzeughalters 2 ist der Werkstückhalter 11 angeordnet, der aus bevorzugt drei gegeneinander verschiebbaren und einstellbaren Schlitten 25, 26, 31 besteht.

Das zu bearbeitende Werkstück 16 ist über eine drehangetriebene Werkstückaufnahme 17 gehalten, die in Pfeilrichtung 28 drehbar ist. Die Werkstückaufnahme 17 ist in einer Rundachse 24 drehbar gelagert, welche Rundachse 24 wiederum in der Schwenkachse 14 in den Kipprichtungen 13 schwenkbar ausgebildet ist. Sie ist Teil eines X-Schlittens 25, der eine Verschiebung des Werkstücks 16 in der X-Koordinate ausführt. Der X-Schlitten 25 ist in einem Y-Schlitten 26 verschiebbar gelagert, um so die Verschiebung in Y-Richtung (Pfeilrichtung 27) auszuführen.

Ferner ist der Y-Schlitten 26 in einem Z-Schlitten 31 verschiebbar gelagert, um eine Verschiebung in Pfeilrichtung 15 zu bewerkstelligen.

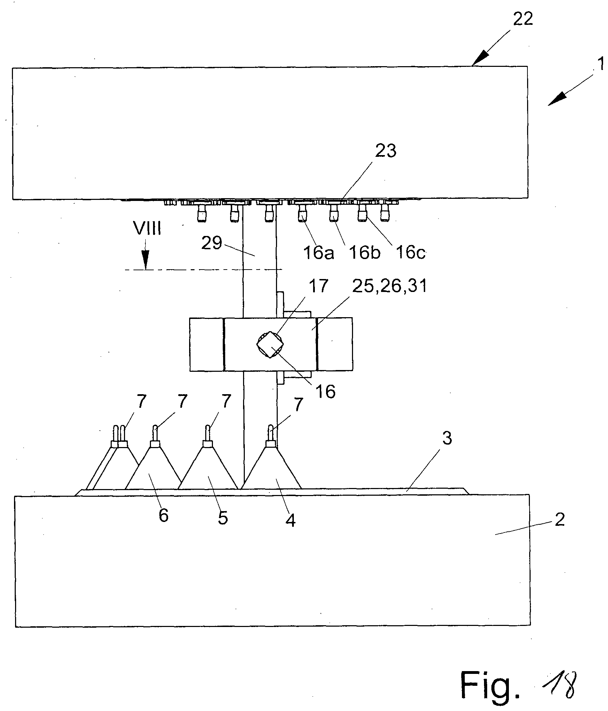

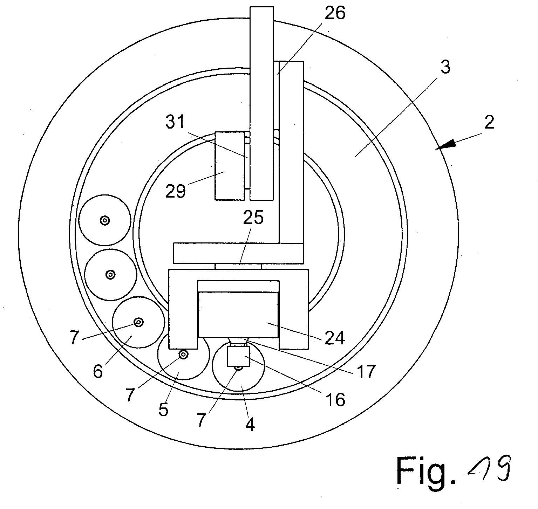

Die Figuren 18 und 19 zeigen, dass der Werkstückhalter 11 mit seinen Schlittenelementen 25, 26, 31 in einem vertikalen Ständer 29 angeordnet ist, der die Verbindung zwischen dem unteren Werkzeughalter 2 und dem oberen Werkstückwechsler 22 erbringt.

Der obere Werkstückwechsler 22 weist einen Drehteller 23 auf, an dem eine Anzahl von Werkstücken 16a, 16b, 16c auswechselbar angeordnet ist.

Als Einspannvorrichtung wird hier eine leicht lösbare Steckvorrichtung bevorzugt. Das zu bearbeitende Werkstück 16 ist ferner in einer üblichen Werkstückaufnahme gehalten, wie zum Beispiel einem Werkstückspanner, der mechanisch, pneumatisch oder elektromagnetisch arbeiten kann.

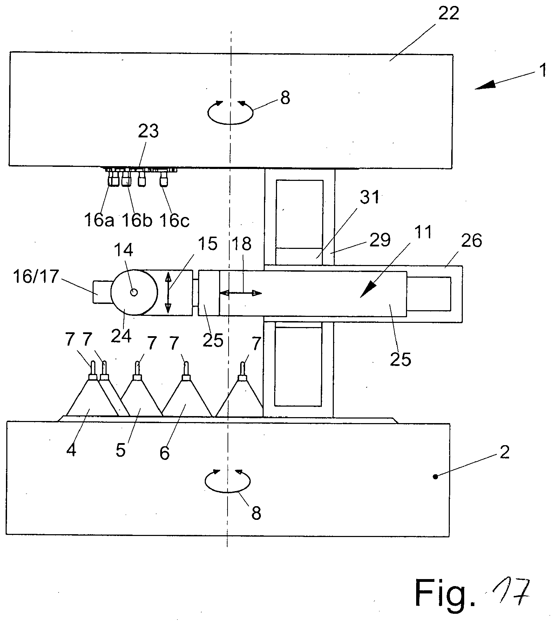

Die Figuren 17 und 18 zeigen die senkrecht zueinander verschiebbaren Schlitten 25, 26, 31 und somit die Möglichkeit, dass das zu bearbeitende Werkstück 16 in jeder beliebigen Bearbeitungsposition, Schwenklage und Raumlage einem beliebigen Werkzeug 7 zugeführt werden kann und dort bearbeitet wird.

### Zeichnungslegende

- 1: Bearbeitungsvorrichtung
- 2: Werkzeughalter a, b
- 3: Drehteller
- 4: Werkzeugspindel
- 5: Werkzeugspindel
- 6: Werkzeugspindel
- 7: Werkzeug
- 8: Pfeilrichtung 8a
- 9: Drehachse
- 10: Bearbeitungsvorrichtung
- 11: Werkstückhalter a, b
- 12: Grundkörper
- 13: Kipprichtung 13a
- 14: Schwenkachse
- 15: Pfeilrichtung
- 16: Werkstück a, b, c
- 17: Werkstückaufnahme
- 18: Pfeilrichtung
- 19: Drehteller
- 20: Bearbeitungsvorrichtung
- 21: Pfeilrichtung
- 22: Werkstückwechsler 22a, b
- 23: Drehteller
- 24: Rundachse
- 25: X-Schlitten
- 26: Y-Schlitten
- 27: Pfeilrichtung
- 28: Pfeilrichtung
- 29: Ständer
- 30: Bearbeitungsvorrichtung
- 31: Z-Schlitten
- 32: obere Gabel
- 33: untere Gabel
- 34: Werkzeugspeicher 34'
- 35: Drehteller
- 36: Pfeilrichtung
- 37: Pfeilrichtung
- 38: Position (für 34 in Fig. 2)
- 39: Abdeckhaube
- 40: Abdeckhaube
- 41: Antriebsachse
- 42: Treibriemen (für 22)
- 43: Haltearm (für 22)
- 44: Steckvorrichtung
- 45: Motorachse
- 46: Treibriemen (für 34)
- 47: Getriebe
- 48: Trennfuge
- 49: Haltearm (für 34)
- 50: Flüssigkeitstank
- 51: Treibriemen (für 11)
- 52: Treibriemen (für 11)
- 53: Schlittenantrieb (für 11)
- 54: Grundplatte
- 55: Ständer
- 56: Mittelteil
- 57: Oberteil
- 58: Abdeckung
- 59 60: Dreh- und Schwenkachse (von 11)

## Patentansprüche

1. Bearbeitungsvorrichtung zur maschinengestützten Herstellung und Bearbeitung von dentalen Werkstücken (16), insbesondere von künstlichen Zähnen und/oder anderen dentalen Ersatzteilen, wobei das mindestens eine Werkstück (16) in mindestens einem heb- und senkbaren, sowie drehbar angetriebenen Werkstückhalter (11) eingespannt ist, der in einer Drehachse (9) positioniert ist und das Werkstück (16) zwecks Bearbeitung mindestens einer drehangetriebenen Werkzeugspindel (4, 5, 6) mit mindestens einem darauf befestigten Werkzeug (7) zustellt, **dadurch gekennzeichnet, dass** der Werkstückhalter (11, 11a, 11b) als Mehrachs-Roboter ausgebildet ist, auf dessen einen Seite mindestens ein Werkzeughalter (2, 2a, 2b) mit einem darauf drehbar angetriebenen und auswechselbaren Werkzeug (7) angeordnet ist, und dass auf der anderen Seite des Werkstückhalters (11, 11a, 11b) ein Werkzeugspeicher (34) und ein Werkstückwechsler (22, 22a, 22b) angeordnet ist, in dem die zu bearbeitenden Werkstücke (16, 16a, 16b, 16c) auswechselbar aufgenommen sind, wobei der als Mehrachs-Roboter ausgebildete Werkstückhalter (11, 11a, 11b) mindestens als 5-Achs-Roboter ausgebildet ist und an seinem Kopf eine Vorrichtung zur Einspannung des zu bearbeitenden Werkstücks (16), sowie zwei einander gegenüberliegende Greifwerkzeuge (32, 33) aufweist, dass der Werkzeugspeicher (34) aus einer Vielzahl von Haltearmen (49) besteht, die gemeinsam in der Art eines Drehtellers (35) drehbar angetrieben sind, und dass am jeweiligen freien Ende des Halterarms (49) ein Werkzeug (7) in einer Steckvorrichtung aufgenommen ist.

2. Bearbeitungsvorrichtung nach Anspruch 1, **dadurch gekennzeichnet, dass** die Greifwerkzeuge als Gabeln (32, 33) ausgebildet sind, welche jeweils ein Werkzeug (7) zum Austausch der Werkstücke bei der Zuführung zum Mehrachs-Werkstückhalter (11, 11 a, 11b) aufnehmen.

3. Bearbeitungsvorrichtung nach einem der Ansprüche 1 bis 2, **dadurch gekennzeichnet, dass** der Werkstückwechsler (22) aus einer Vielzahl von Haltearmen (43) besteht, die gemeinsam in der Art eines Drehtellers (23) drehbar angetrieben sind und dass am jeweiligen freien Ende des Haltearms (43) eine Steckvorrichtung (44) für die auswechselbare Halterung eines Werkstücks (16) angeordnet ist.

4. Bearbeitungsvorrichtung nach Anspruch 3, **dadurch gekennzeichnet, dass** das die Haltearme (49) des Werkzeugspeichers (34) koaxial zueinander und vertikal übereinander auf einer gemeinsamen Antriebsachse (41) angeordnet sind und getrennt voneinander angetrieben sind.

5. Bearbeitungsvorrichtung zur maschinengestützten Herstellung und Bearbeitung von dentalen Werkstücken (16), insbesondere von künstlichen Zähnen und/oder anderen dentalen Ersatzteilen, wobei das mindestens eine Werkstück (16) in mindestens einem heb- und senkbaren, sowie drehbar angetriebenen Werkstückhalter (11) eingespannt ist, der in einer Drehachse (9) positioniert ist und das Werkstück (16) zwecks Bearbeitung mindestens einer drehangetriebenen Werkzeugspindel (4, 5, 6) mit einem darauf befestigten Werkzeug (7) zustellt, **dadurch gekennzeichnet, dass** dem Werkstückhalter (11, 11a, 11b) auf der einen Seite gegenüberliegend ein weiterer als Drehteller (3) ausgebildeter Werkzeughalter (2, 2a, 2b) mit einer Vielzahl von darauf angeordneten Werkzeugen (7) zugeordnet ist, wobei jedes Werkzeug einer separat drehangetriebenen Werkzeugspindel zugeordnet ist, und dass auf der anderen Seite des Werkstückhalters (11, 11a, 11b) ein Werkstückwechsler (22, 22a, 22b) angeordnet ist, in dem die zu bearbeitenden Werkstücke (16, 16a, 16b, 16c) auswechselbar aufgenommen sind.

6. Bearbeitungsvorrichtung nach Anspruch 1 oder 5, **dadurch gekennzeichnet, dass** der Werkstückhalter (11, 11a, 11b) im Zwischenraum zwischen dem Werkzeughalter (2, 2a, 2b) und dem Werkstückwechsler (22, 22a, 22b) angeordnet ist.

7. Bearbeitungsvorrichtung nach einem der Ansprüche 1 bis 3, **dadurch gekennzeichnet, dass** der Werkstückhalter (11, 11a, 11b) als X-Y-Z-Schlitten ausgebildet ist, sodass das eingespannte Werkstück (16, 16a, 16b, 16c) in allen drei Raumrichtungen in jeder beliebigen Raumachse und Koordinate gedreht, geschwenkt und gezogen werden kann.

8. Verfahren zur maschinengestützten Herstellung und Bearbeitung von dentalen Werkstücken (16), insbesondere von künstlichen Zähnen und/oder anderen dentalen Ersatzteilen, unter Verwendung einer Bearbeitungsvorrichtung nach Anspruch 1 oder Anspruch 5, wobei das mindestens eine Werkstück (16) in mindestens einem heb- und senkbaren, sowie drehbar angetriebenen Werkstückhalter (11) eingespannt ist, der in einer Drehachse (9) positioniert ist und das Werkstück (16) zwecks Bearbeitung mindestens einer drehangetriebenen Werkzeugspindel (4, 5, 6) mit einem darauf befestigten Werkzeug (7) zustellt, **dadurch gekennzeichnet, dass**
a. in einem ersten Bearbeitungsschritt der Werkstückhalter (11, 11a, 11b) aus einem beliebigen Steckplatz ein Rohwerkstück (16) aus einem Werkstückwechsler (22, 22a, 22b, 34) entnimmt, es einspannt und in die Bearbeitungsposition in Richtung auf einen gegenüber liegend angeordneten Werkzeughalter (2, 2a, 2b) mit mindestens einem drehend angetriebenen Werkzeug (7) fährt,
b. dass in einem zweiten Bearbeitungsschritt eine Vielzahl von Bearbeitungsvorgängen am eingespannten Werkstück (16, 16a, 16b, 16c) oberhalb des Werkzeughalters (2, 2a, 2b) und des drehangetriebenen Werkzeugs (7) ablaufen,
c. dass in einem dritten Verfahrensschritt nach Vollendung der Bearbeitung des Werkstücks (16, 16a, 16b, 16c) der Werkstückhalter (11, 11a, 11b) mit dem noch eingespannten, fertig bearbeiteten Werkstück (16, 16a, 16b, 16c) in Richtung auf den Werkstückwechsler (22, 22a, 22b) fährt, das fertig bearbeitete Werkstück in einen freien Steckplatz steckt und sich von einem anderen Steckplatz ein Roh-Werkstück abholt, das er einspannt und einer neuen Bearbeitung am unteren Werkzeughalter (2, 2a, 2b) zuführt.

## Claims

1. A machining device for the machine-assisted production and machining of dental workplaces (16), especially of artificial teeth and/or other dental restorations, wherein the at least one workpiece (16) is clamped in at least one workpiece holder (11) capable of being raised and lowered and being rotatably driven, which is positioned in a rotational axis (9) and feeds the workpiece (16) for machining to at least one rotationally driven tool spindle (4, 5, 6) having at least one tool (7) fastened thereon, **characterized in that** the workpiece holder (11, 11a, 11b) is designed as a multi-axis robot, on one side of which at least one tool holder (2, 2a, 2b) with a tool (7) rotatably driven and exchangeable Is arranged thereon, and **in that** a tool storage (34) and a workpiece changer (22, 22a, 22b) are arranged on the other side of the workpiece holder (11, 11a, 11b), In which the workpieces (16, 16a, 16b, 16c) to be machined are replaceably accommodated, wherein the workpiece holder (11, 11a, 11b) designed as a multi-axis robot is designed at least as an 5-axis robot and, on its head, comprises a device for clamping the workpiece (16) to be machined, as well as two gripping tools (32, 33) located opposite to each other, **in that** the tool storage (34) consists of a plurality of holding arms (49) which jointly are rotatably driven In the manner of a turntable (35) and **in that**, at the respective free end of the holding arm (49), a tool (7) is accommodated in a plug-in device.

2. The machining device according to claim 1, **characterized In that** the gripping tools are designed as forks (32, 33) which each receive a tool (7) for replacing the workpieces when being fed to the multi-axis tool holder (11, 11a, 11b).

3. The machining device according to one of claims 1 to 2, **characterized in that** the workpiece changer (22) consists of a plurality of holding arms (43) which jointly are rotatably driven in the manner of a turntable (23), and **in that** at the respective free end of the holding arm (43) a plug-in device (44) is arranged for replaceably holding a workpiece (16).

4. The machining device according to claims 3 and 4, **characterized in that** the holding arms (49) of the tool storage (34) are arranged coaxially to each other and vertically one above the other on a common drive axis (41) and are driven separately from each other.

5. The machining device for machine-assisted production and machining of dental workpieces (16), especially artificial teeth and/or other dental restorations, wherein the at least one workpiece (16) is clamped In at least one workpiece holder (11) capable of being raised and lowered and being rotatably driven, which is positioned in an rotational axis (9) and feeds the workpiece (16) for machining to at least one rotationally driven tool spindle (4, 5, 6) having a tool (7) fastened thereon, **characterized in that** on an opposite side another tool holder (2, 2a, 2b) formed as a turntable (3) having a plurality of tools (7) arranged thereon is assigned to the workpiece holder (11, 11a, 11b), each tool being assigned to a separately rotationally driven tool spindle, and **in that** a workpiece changer (22, 22a, 22b) is arranged on the other side of the tool holder (11, 11a, 11b), In which workpiece changer the workpieces (16, 16a, 16b, 16c) to be machined are replaceably accommodated.

6. The machining device according to claim 1 or 5, **characterized in that** the workpiece holder (11, 11a, 11b) is arranged In the Intermediate space between the tool holder (2, 2a, 2b) and the workpiece changer (22, 22a, 22b).

7. The machining device according to one of claims 1 to 3, **characterized In that** the workpiece holder (11, 11a, 11b) is configured as a X-Y-Z sledge, so that the clamped workpiece (16, 16a, 16b, 16c) can be rotated, pivoted and pulled in all three spatial directions towards any desired spatial axis and coordinate.

8. A method for the machine-assisted production and machining of dental workpieces (16), especially artificial teeth and/or other dental restorations, using a machining device according to claim 1 or claim 5, wherein the at least one workpiece (16) is clamped in at least one workpiece holder (11) capable of being raised and lowered and being rotatably driven, which is positioned in an rotational axis (9) and feeds the workpiece (16) for machining to at least one rotationally driven tool spindle (4, 5, 6) having at least one tool (7) fastened thereon, **characterized in that**
a. In a first machining step, the workpiece holder (11, 11a, 11b) removes a blank (16) from any slot from a workpiece changer (22, 22a, 22b, 34), clamping it and traveling into the machining position towards an oppositely arranged tool holder (2, 2a, 2b) having at least one rotationally driven tool (7),
b. in a second machining step, a plurality of machining operations are performed with the clamped workpiece (16, 16a, 16b, 16c) above the tool holder (2, 2a, 2b) and the rotationally driven tool (7),
c. in a third process step, after completion of machining the workpiece (16, 16a, 16b, 16c), the workpiece holder (11, 11a, 11b), with the still clamped, finished machined workpiece (16, 16a, 16b, 16c), travels towards the workpiece changer (22, 22a, 22b), the finished machined workpiece is inserted into a free slot and a blank is picked up from another slot, clamping it in place and passing it to a new machining operation on the lower tool holder (2, 2a, 2b).

## Revendications

1. Dispositif d'usinage pour la fabrication et l'usinage à ' 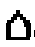 aide de machines des pièces dentaires (16), en particulier des dents artificielles et/ou des pièces de rechange dentaires, où au ladite moins une pièce (16) est serrée dans au moins un porte-pièce (11) pouvant être soulevé, abaissé et mis en rotation, qui est positionné dans un axe rotatif (9) et présente la pièce (16) pour être usinée par au moins une broche d'outil (4, 5, 6) entraînée en rotation avec au moins un outil (7) fixé dessus, **caractérisé en ce que** que le porte-pièce (11, 11a, 11b) est conçu comme un robot multiaxes, et un porte-outil (2, 2a, 2b) avec au moins un outil entraîné par rotation Interchangeable (7) est disposé sur l'une des faces, et que sur l'autre face du porte-pièce (11, 11a, 11b) un magasin d'outils (34) et un changeur de pièces (22, 22a, 22b) est disposé, dans lequel les pièces à usiner (16, 16a, 16b, 16c) peuvent être accueillies de manière interchangeable, où le porte-pièce (11, 11a, 11b), conçu comme un robot multiaxes est conçu au moins comme un robot à 5 axes et présente à sa tête un dispositif pour serrer les pièces à usiner (16), ainsi que deux outils de préhension opposés (32, 33), et où chaque outil de préhension (32, 33) est formé pour accueillir un outil (7), que le magasin d'outils (34) est composé d'une pluralité de bras de maintien (49), qui sont collectivement entraînés en rotation, à la manière d'un plateau tournant (35), et qu'à l'extrémité libre respective de chaque bras de maintien (49) un outil (7) est accueilli dans un dispositif enfichable.

2. Dispositif d'usinage selon la revendication 1, **caractérisé en ce que** les outils de préhension sont conçus comme fourches (32, 33), dont chacun accueil un outil (7) pour le remplacement des pièces lors de l'alimentation du porte-pièce multiaxes (11, 11a, 11b).

3. Dispositif d'usinage selon l'une des revendications 1 ou 2, **caractérisé en ce que** le changeur de pièces (22) est composé d'une pluralité de bras de maintien (43), qui sont collectivement entraînés en rotation, à la manière d'un plateau tournant (35), et qu'à l'extrémité libre respective de chaque bras de maintien (43) un dispositif enfichable (44) est disposé pour le support d'une pièce à usiner (16) de manière amovible.

4. Dispositif d'usinage selon les revendications 3, **caractérisé en ce que** les bras de maintien (49) du magasin d'outils (34) sont disposés de manière coaxiale les uns par rapport aux autres et verticalement les uns au dessus des autres sur un axe d'entraînement commun (41) et sont entraînés séparément.

5. Dispositif d'usinage pour la fabrication et l'usinage à l'aide de machines des pièces dentaires (16), en particulier des dents artificielles et/ou des pièces de rechange dentaires, où ladite au moins une pièce (16) est serrée dans au moins un porte-pièce (11) pouvant être soulevé, abaissé et mis en rotation, qui est positionné dans un axe rotatif (9) et présente la pièce (16) pour être usinée par au moins une broche d'outil (4, 5, 6) entraînée en rotation avec un outil (7) fixé dessus, **caractérisé en ce qu'**un porte-outil supplémentaire (2, 2a, 2b) conçu comme plateau tournant (3) sur lequel est disposé une pluralité d'outils (7) est associé au porte-pièce (11, 11a, 11b) sur une face opposée, où chaque outil est associé à une broche d'outil entraînée en rotation séparément et qu'un changeur de pièces (22, 22a, 22b) est disposé sur l'autre face du porte-pièce (11, 11a, 11b) dans lequel les pièce à usiner (16, 16a, 16b, 16c) sont accueillies de manière amovible.

6. Dispositif d'usinage selon la revendication 1 ou 5, **caractérisé en ce que** le porte-pièce (11, 11a, 11b) est disposé dans l'espace entre le porte-outil (2, 2a, 2b) et le changeur de pièce (22, 22a, 22b).

7. Dispositif d 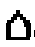 usinage selon l'une des revendications 1 à 3, **caractérisé en ce que** que le porte-pièce (11, 11a, 11b) est conçu comme un chariot X-Y-Z, de telle manière à pouvoir tourner, pivoter et tirer la pièce serrée (16, 16a, 16b, 16c) dans les trois directions spatiales dans n'importe quel axe spatial et coordonnée.

8. Procédé de fabrication et d'usinage à l'aide de machines des pièces dentaires (16), en particulier des dents artificielles et/ou des pièces de rechange dentaires, à l'aide d'un dispositif d'usinage selon la revendication 1 ou la revendication 5, où ladite au moins une pièce (16) est serrée dans au moins un porte-pièce (11) pouvant être soulevé, abaissé et mis en rotation, qui est positionné dans un axe rotatif (9) et présente la pièce (16) pour être usinée par au moins une broche d'outil (4, 5, 6) entraînée en rotation avec un outil (7) fixé dessus, **caractérisé en ce que** s. dans une première étape d'usinage le porte-pièce (11, 11b) enlève une pièce brute (16) dans un quelconque emplacement d'un changeur de pièces (22, 22a, 22b, 34), le serre et le déplace dans la position d'usinage vers un porte-outils (2, 2a, 2b) disposé en face avec au moins un outil entraîné en rotation (7),
b. dans une deuxième étape d'usinage, une pluralité de processus d'usinage se déroulent sur la pièce (16, 16a, 16b, 16b) serrée au-dessus du porte-outil (2, 2a, 2b) et de l'outil entraîné en rotation (7),
c. dans une troisième étape du procédé, après l'achèvement de l'usinage de la pièce (16, 16a, 16b, 16c), le porte-pièce (11, 11a, 11b) se déplace avec la pièce (16, 16a, 16b, 16c) déjà usinée encore serrée vers le changeur de pièces (22, 22a, 22b), place la pièce déjà usinée dans un emplacement libre et ramasse une pièce brute dans un autre emplacement, qu'il serre et conduit vers le porte-outil Inférieur (2, 2a, 2b) pour un nouveau procédé d'usinage.
